# EUROPEAN PATENT APPLICATION

(11) **EP 4 574 513 A1**
(43) Date of publication of application: **25.06.2025**
(21) Application number: 23854326.8
(22) Date of filing: 10.08.2023
(51) Int. Cl.: B60L 1/00

(54) **VEHICLE ONBOARD REFRIGERATOR CONTROL METHOD AND RELATED DEVICE**

(30) Priority: 15.08.2022 CN 202210977430
(71) Applicant: Beijing Chehejia Automobile Technology Co., Ltd., Beijing 101300 (CN)
(72) Inventor: ZHANG, Ziwen, Beijing 101300 (CN); HU, Yikai, Beijing 101300 (CN); QIU, Peng, Beijing 101300 (CN)
(74) Representative: Michalski Hüttermann & Partner Patentanwälte mbB
(86) International application number: PCT/CN2023/112311
(87) International publication number: WO 2024/037425

(57) **Abstract**

A method includes: in response to determining that a battery power is less than or equal to a preset threshold power and a vehicle state is a powered-on state or a startup state, controlling (S102) the vehicle-mounted refrigerator to be turned off, and in response to turning off the vehicle-mounted refrigerator, turning off a delay switch; in response to determining that the battery power is greater than the threshold power and determining that the vehicle state is the powered-on state or the startup state, keeping (S103) turning on the delay switch for the vehicle-mounted refrigerator; and in response to determining that the working duration is set for the vehicle-mounted refrigerator, turning (S104) on the vehicle-mounted refrigerator when the vehicle state becomes a powered-off state, and controlling the vehicle-mounted refrigerator to be in a turned-on state or a turned-off state according to a timing process for the working duration.

## Description

### CROSS-REFERENCE TO RELATED APPLICATION

This application claims the priority of the Chinese Patent application filed on August 15th, 2022 before the CNIPA, China National Intellectual Property Administration with the application number of 202210977430.3, which is incorporated herein in its entirety by reference.

### FIELD

Embodiments of the present disclosure relate to the field of vehicle-mounted refrigerators, in particular to a method and apparatus for controlling a vehicle-mounted refrigerator, a related device, a storage medium, a computer program product, a computer program, and a vehicle.

### BACKGROUND

Due to high power consumption of a related vehicle-mounted refrigerator in a use process, it is very easy to run out of power of a vehicle battery during work.

Specifically, the vehicle-mounted refrigerator continuously works and consumes power when a vehicle is powered off, at this moment, the vehicle is unattended, that is, the vehicle-mounted refrigerator is not controlled to continuously work, and therefore, the power of the vehicle battery will be continuously consumed by the vehicle-mounted refrigerator until the power of the vehicle battery runs out.

However, when the vehicle is in a powered-off state, or when the vehicle is in a powered-on or startup state, especially for an electric vehicle, it is also extremely easy to run out of the power of the vehicle battery under the condition that the vehicle-mounted refrigerator works continuously and unconditionally or a user turns on or turns off the vehicle-mounted refrigerator by experience only.

Therefore, in a control mode of the related vehicle-mounted refrigerator, effective and reasonable control on the vehicle-mounted refrigerator in conjunction with different states and battery powers of the vehicle cannot be achieved.

Based on this, a solution by which the vehicle-mounted refrigerator may be intelligently and reasonably controlled with the comprehensive consideration of the different states of the vehicle and in conjunction with the battery power is needed.

### SUMMARY

To this end, embodiments of the present disclosure provide a method and apparatus for controlling a vehicle-mounted refrigerator, a related device, a storage medium, a computer program product, a computer program, and a vehicle.

An embodiment in a first aspect of the present disclosure provides a method for controlling a vehicle-mounted refrigerator, including:
respectively determining a vehicle state and a battery power of a vehicle in real time;
in response to determining that the battery power is less than or equal to a preset threshold power and the vehicle state is a powered-on state or a startup state, controlling the vehicle-mounted refrigerator to be turned off, and in response to turning off the vehicle-mounted refrigerator, turning off a delay switch setting a working duration for the vehicle-mounted refrigerator;
in response to determining that the battery power is greater than the threshold power and determining that the vehicle state is the powered-on state or the startup state, keeping turning on the delay switch of the vehicle-mounted refrigerator; and
in response to determining that the delay switch is turned on and the working duration is set for the vehicle-mounted refrigerator, turning on the vehicle-mounted refrigerator when the vehicle state becomes a powered-off state, and controlling the vehicle-mounted refrigerator to be in a turned-on state or a turned-off state according to a timing process for the working duration.

In some embodiments, the controlling the vehicle-mounted refrigerator to be in a turned-on state or a turned-off state according to a timing process for the working duration comprises:
in response to determining that the battery power is less than or equal to the threshold power, controlling the vehicle-mounted refrigerator to be turned off; and
in response to turning off the vehicle-mounted refrigerator, turning off the delay switch.

In some embodiments, the controlling the vehicle-mounted refrigerator to be in a turned-on state or a turned-off state according to a timing process for the working duration further comprises:
in response to determining that the timing process is ended, controlling the vehicle-mounted refrigerator to be turned off; and
in response to turning off the vehicle-mounted refrigerator, turning off the delay switch.

In some embodiments, the controlling the vehicle-mounted refrigerator to be in a turned-on state or a turned-off state according to a timing process for the working duration further comprises:
in response to determining that the vehicle state becomes from the powered-off state to the startup state, turning off the delay switch.

In some embodiments, the controlling the vehicle-mounted refrigerator to be in a turned-on state or a turned-off state according to a timing process for the working duration further comprises:
in the timing process for the working duration, in response to determining that the vehicle state becomes from the powered-off state to the powered-on state, keeping the delay switch to be in a turned-on state; and
in response to the delay switch being in the turned-on state, keeping the vehicle-mounted refrigerator to be in the turned-on state.

In some embodiments, after the controlling the vehicle-mounted refrigerator to be turned off, the method further comprises:
according to a vehicle state and a battery power when the vehicle-mounted refrigerator is turned off, determining a reason that the vehicle-mounted refrigerator is turned off; and
visually displaying the reason.

In some embodiments, after the turning on the vehicle-mounted refrigerator when the vehicle state becomes the powered-off state, the method further comprises:
determining the current temperature in the vehicle-mounted refrigerator in real time, and setting a temperature threshold;
in response to determining that the current temperature is lower than the temperature threshold, controlling the vehicle-mounted refrigerator to be turned off; and
in response to determining that the current temperature is higher than or equal to the temperature threshold, controlling the vehicle-mounted refrigerator to be kept turned-on.

In some embodiments, real-time determination for the battery power comprises:
taking a power battery provided in the vehicle as a power supply battery of the vehicle-mounted refrigerator, and determining residual power of the power battery in real time; and
taking the residual power of the power battery as the battery power.

In some embodiments, the real-time determination for the battery power further comprises:
disposing a storage battery supplying electric power for the vehicle-mounted refrigerator;
utilizing a power battery provided in the vehicle to supply power to the storage battery;
determining residual power of the storage battery in real time; and
taking the residual power of the storage battery as the battery power.

In some embodiments, the utilizing the power battery provided in the vehicle to supply power to the storage battery comprises:
setting a power supply threshold for the power battery;
determining the residual power of the power battery in real time;
in response to determining that the residual power of the power battery is greater than the power supply threshold, enabling the power battery to continuously supply power to the storage battery; and
in response to determining that the residual power of the power battery is less than or equal to the power supply threshold, enabling the power battery to stop supplying power to the storage battery.

Based on the same inventive concept, an embodiment in a second aspect of the present disclosure provides an apparatus for controlling a vehicle-mounted refrigerator, comprising a detection module, a first determination module, a second determination module, and a delay turn-on module; wherein
the detection module is configured to respectively determine a vehicle state and a battery power of a vehicle in real time;
the first determination module is configured to, in response to determining that the battery power is less than or equal to a preset threshold power and the vehicle state is a powered-on state or a startup state, control the vehicle-mounted refrigerator to be turned off, and in response to turning off the vehicle-mounted refrigerator, turn off a delay switch setting a working duration for the vehicle-mounted refrigerator;
the second determination module is configured to, in response to determining that the battery power is greater than the threshold power and determining that the vehicle state is the powered-on state or the startup state, keep turning on the delay switch of the vehicle-mounted refrigerator; and
the delay turn-on module is configured to, in response to determining that the delay switch is turned on and the working duration is set for the vehicle-mounted refrigerator, turn on the vehicle-mounted refrigerator when the vehicle state becomes a powered-off state, and control the vehicle-mounted refrigerator to be in a turned-on state or a turned-off state according to a timing process for the working duration.

Based on the same inventive concept, an embodiment in a third aspect of the present disclosure provides an electronic device, comprising a memory, a processor, and a computer program stored in the memory and executable for the processor, wherein the processor, when executing the computer program, implements the method according to the first aspect.

Based on the same inventive concept, an embodiment in a fourth aspect of the present disclosure provides a non-transitory computer-readable storage medium, wherein the non-transitory computer-readable storage medium stores a computer instruction, and the computer instruction is used for enabling a computer to perform the method according to the first aspect.

Based on the same inventive concept, an embodiment in a fifth aspect of the present disclosure provides a vehicle, comprising the apparatus for controlling the vehicle-mounted refrigerator according to the second aspect or the electronic device according to the third aspect.

Based on the same inventive concept, an embodiment in a sixth aspect of the present disclosure provides a computer program product, comprising a computer program, wherein the computer program, when being executed by a processor, implements the method according to the first aspect.

Based on the same inventive concept, an embodiment in a seventh aspect of the present disclosure provides a computer program, comprising computer program codes, wherein the computer program codes, when running on the computer, enable a computer to perform the method according to the first aspect.

It may be seen from above description that according to the method and apparatus for controlling the vehicle-mounted refrigerator, the related device, the storage medium, the computer program product, the computer program and the vehicle provided in the embodiments of the present disclosure, the vehicle-mounted refrigerator is controlled by comprehensively considering different vehicle states including the powered-on, powered-off and startup states based on detection for the vehicle state and the battery power, and the set threshold power is combined, so that the vehicle-mounted refrigerator may be immediately turned off when the battery power is less than or equal to the threshold power, and thus, the situation that the vehicle-mounted refrigerator works to run out of the battery power is avoided.

In some embodiment, by means of the delay switch turned on when the vehicle is in the powered-on or startup state, on the premise that the battery power is greater than the threshold power, the continuous work of the vehicle-mounted refrigerator may be achieved after the vehicle is powered off, and the vehicle-mounted refrigerator may be controlled according to the set working duration and may be specifically controlled to be kept turned on or off according to a situation in the timing process.

It may be seen that the present method is used for controlling the vehicle-mounted refrigerator in conjunction with different vehicle states and battery powers, so that not only may the vehicle-mounted refrigerator be continuously used after being powered off, but also the situation that the battery power runs out in various vehicle states is avoided.

### BRIEF DESCRIPTION OF THE DRAWINGS

In order to provide a clearer explanation of the technical solutions in the present disclosure or related art, a brief introduction will be given to the accompanying drawings required for descriptions of the embodiments or the related art. It is obvious that the accompanying drawings described below are only embodiments of the present disclosure. For those skilled in the art, other drawings can be obtained based on these drawings without creative work.
FIG. 1 is a flow chart of a method for controlling a vehicle-mounted refrigerator according to an embodiment of the present disclosure;
FIG. 2 is a schematic diagram of an interactive logic according to an embodiment of the present disclosure;
FIG. 3 is a schematic structural diagram of an apparatus for controlling a vehicle-mounted refrigerator according to an embodiment of the present disclosure; and
FIG. 4 is a schematic structural diagram of an electronic device according to an embodiment of the present disclosure.

### DETAILED DESCRIPTION

In order to make the purpose, technical solution, and advantages of the present disclosure clearer and more understandable, the following will provide further detailed explanations of the present disclosure in conjunction with specific embodiments and with reference to the accompanying drawings.

It should be noted that, unless otherwise defined, the technical or scientific terms used in the embodiments of the present disclosure should have the usual meanings understood by those with general skills in the field to which the present disclosure belongs. The terms "first", "second", and similar words used in the embodiment of the present disclosure do not indicate any order, quantity, or importance, but are only used to distinguish different components. Terms such as "including/comprising" or "containing" refer to the elements or objects that appear before the word, including those listed after the word and their equivalents, without excluding other elements or objects. Terms such as "connection" or "connected" are not limited to physical or mechanical connections, but can include electrical connections, whether direct or indirect. Terms such as "up", "down", "left", "right", etc. are only used to represent relative positional relationships. When the absolute position of the described object changes, the relative positional relationship may also change accordingly.

As mentioned in the background art, a method for controlling a related vehicle-mounted refrigerator is difficult to meet an actual use demand.

It is found by the applicant in a process of achieving the present disclosure that there is a major problem in the method for controlling the related vehicle-mounted refrigerator that due to high power consumption of the related vehicle-mounted refrigerator in a use process, it is very easy to run out of power of a vehicle battery during work.

Specifically, the vehicle-mounted refrigerator continuously works and consumes power when a vehicle is powered off, at the moment, the vehicle is unattended, that is, the vehicle-mounted refrigerator is not controlled to continuously work, and therefore, the power of the vehicle battery will be continuously consumed by the vehicle-mounted refrigerator until the power of the vehicle battery runs out.

However, when the vehicle is in a powered-off state, or when the vehicle is in a powered-on or startup state, especially for an electric vehicle, it is also extremely easy to run out of the power of the vehicle battery under the condition that the vehicle-mounted refrigerator works continuously and unconditionally or a user turns on or turns off the vehicle-mounted refrigerator by experience only.

Therefore, in a control mode of the related vehicle-mounted refrigerator, effective and reasonable control on the vehicle-mounted refrigerator in conjunction with different states and battery powers of the vehicle cannot be achieved.

Based on this, an embodiment in a first aspect of the present disclosure provides a method for controlling a vehicle-mounted refrigerator, and the embodiment of the present disclosure will be described below in detail in conjunction with the accompanying drawings.

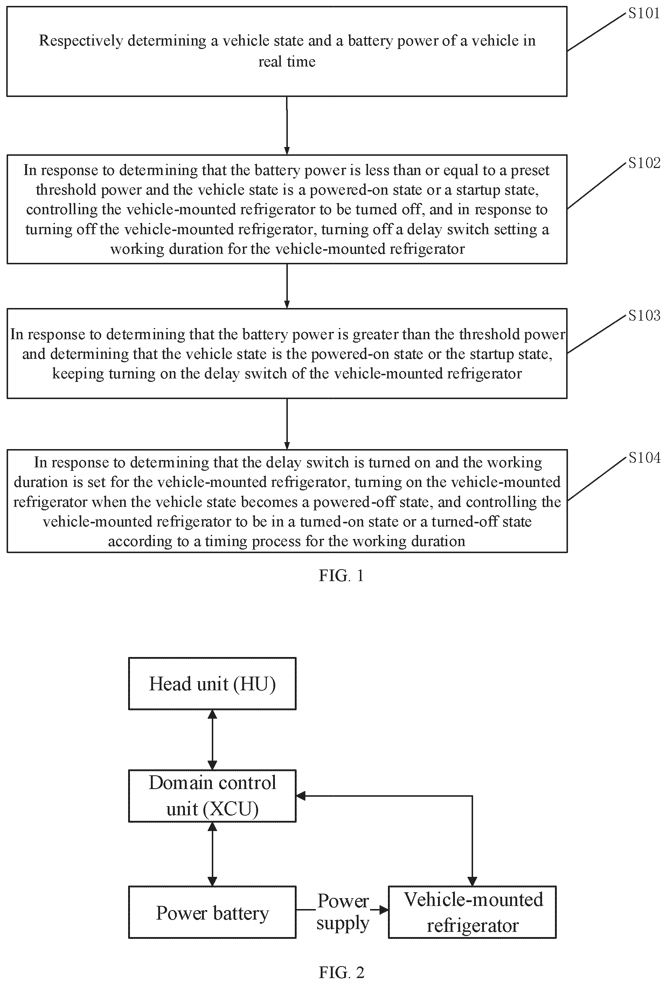

Referring FIG. 1, a method for controlling a vehicle-mounted refrigerator according to an embodiment of the present disclosure includes the following steps S101 to S104.

Step S101, respectively determining a vehicle state and a battery power of a vehicle in real time.

In the embodiment of the present disclosure, as a specific example in which a vehicle-mounted refrigerator of an electric vehicle is controlled, as shown in FIG. 2, the electric vehicle is specifically provided with a Head Unit (which is referred to as HU in the embodiment of the present disclosure), a Domain Control Unit (which is referred to as XCU in the embodiment of the present disclosure), a power battery, and a Vehicle-mounted Refrigerator (which may also be referred to as VFridge in the embodiment of the present disclosure).

Wherein the power battery is used as a vehicle battery of the vehicle in the present embodiment and is specifically used for supplying power for each electric appliance and electric vehicle running; a delay switch may be displayed in the HU and is used for setting a working duration of the vehicle-mounted refrigerator, which may also be referred to as a delay duration; and the XCU in the present embodiment is specifically used for controlling the HU and the vehicle-mounted refrigerator and may also be used for acquiring a vehicle state of the vehicle, a state of the vehicle-mounted refrigerator, a state of the delay switch, and a state of the power battery.

In the present embodiment, the vehicle state of the vehicle may be specifically divided into powered-off, powered-on and startup states, wherein in the powered-off state, when the vehicle-mounted refrigerator is not set to continue to work, all other electric appliances will be de-energized, which may be regarded as that the vehicle is in a flameout state, and in the present embodiment, the vehicle state that the vehicle is powered off is expressed as local OFF; in the powered-on state, all the electric appliances of the vehicle will be powered on, and in the present embodiment, the vehicle state that the vehicle is powered on is expressed as local Adaptive Cruise Control (ACC); in the present embodiment, the vehicle state that the vehicle is started is expressed as local ON.

It may be seen that the three vehicle states including the local OFF, the local ACC and the local ON in the present embodiment respectively correspond to three different positions where the vehicle may be located after a key of the vehicle is inserted to a key hole of the vehicle.

In the present embodiment, a percent of the current available power of the vehicle battery (i.e., the power battery) to a capacity of the vehicle battery is expressed as the battery power, and residual battery power of the power battery is expressed as State of Charge (SOC), that is, the residual battery power is displayed on the surface of the power battery; and in some other embodiments, the battery power may also be expressed by the current specific residual power of the battery, such as 20000 mAh.

As shown in FIG. 2, the battery power of the power battery may be acquired in real time by the XCU, and at the same time, the XCU may also acquire the current vehicle state of the vehicle in real time.

In the present embodiment, the refrigerator may be in turned-on and turned-off states respectively expressed as the refrigerator=ON and the refrigerator=OFF; and in some embodiments, the delay switch may also be in turned-on and turned-off states respectively expressed as the delay switch=ON and the delay switch=OFF.

Based on this, the XCU may further control vehicle-mounted refrigerator and the delay switch of the vehicle-mounted refrigerator in conjunction with the current battery power and vehicle state by means of the acquired current battery power and vehicle state.

Step S102, in response to determining that the battery power is less than or equal to a preset threshold power and the vehicle state is a powered-on or startup state, controlling the vehicle-mounted refrigerator to be turned off, and in response to turning off the vehicle-mounted refrigerator, turning off a delay switch setting a working duration for the vehicle-mounted refrigerator.

In the embodiment of the present disclosure, based on the battery power and the vehicle state that are determined in the above-mentioned step S101, the threshold power may be calibrated for the power battery, and the vehicle-mounted refrigerator and the delay switch are controlled in conjunction with the threshold power.

In the present embodiment, the threshold power may be calibrated to be 20%, that is to say, under the condition that the current power of the power battery accounts for 20% of the total capacity of the power battery, it is regarded that the threshold power of the power battery is reached.

In some other embodiments, the threshold power may be calibrated to be other percents according to specific situations.

In some embodiments, based on the set threshold and according to the acquired battery power, the XCU may determine whether the power battery currently reaches the threshold power.

In some embodiments, when it is determined by the XCU that the current SOC of the power battery is less than or equal to the threshold power, the vehicle-mounted refrigerator is controlled to be turned off, that is, the vehicle-mounted refrigerator is controlled in a state that the refrigerator=OFF.

It may be seen that the vehicle is in any one vehicle state from the local ACC, the local ON and the local OFF, when the SOC of the power battery is less than or equal to the threshold power, the vehicle-mounted refrigerator is still continuously used, which may also run out of the power of the power battery, and therefore, in the present embodiment, when the vehicle is in any vehicle state and it is determined by the XCU that the SOC is less than or equal to the threshold power, the vehicle-mounted refrigerator is controlled as the refrigerator=OFF.

It may be seen that when the vehicle is in any vehicle state from the local ACC, the local ON and the local OFF, under the condition that the refrigerator=OFF, the delay switch=OFF, that is to say, when the refrigerator=OFF, conditions of setting a delay duration are not needed, and therefore, when the refrigerator=OFF, the delay switch=OFF, and a function of setting the delay duration is turned off.

It may be seen that based on the set threshold power, the vehicle-mounted refrigerator in any vehicle state may be controlled so as to stop working in time when the SOC of the power battery is insufficient, thereby avoiding running out of the power of the power battery.

Step S103, in response to determining that the battery power is greater than the threshold power and determining that the vehicle state is the powered-on or startup state, keeping turning on the delay switch of the vehicle-mounted refrigerator.

In the embodiment of the present disclosure, based on the battery power determined in the above-mentioned step S101, the delay switch may be turned on according to a specific vehicle state to enable the vehicle-mounted refrigerator to continuously work when the battery power is greater than the calibrated threshold power.

Specifically, in the present embodiment, when it is determined by the XCU that the SOC is greater than the calibrated threshold power, the current vehicle state of the vehicle is further determined.

When it is determined by the XCU that the vehicle is currently in any one vehicle states from the local ACC and the local ON, the XCU may control the delay switch as the delay switch=ON, and set a specific delay duration by means of the delay switch.

In some other embodiments, after it is determined by the XCU that the vehicle is currently in any one vehicle state from the local ACC and the local ON, the delay switch may also be kept in a state that the delay switch= OFF, that is, the vehicle-mounted refrigerator does not continuously work.

It may be seen that a user of the vehicle-mounted refrigerator may control the vehicle-mounted refrigerator by means of the delay switch when the vehicle is in the local ACC or local ON state and the SOC is greater than the threshold power, that is, the vehicle-mounted refrigerator may be continuously turned on.

Step S104, in response to determining that the delay switch is turned on and the working duration is set for the vehicle-mounted refrigerator, turning on the vehicle-mounted refrigerator when the vehicle state becomes a powered-off state, and controlling the vehicle-mounted refrigerator to be in a turned-on state or a turned-off state according to a timing process for the working duration.

In the embodiment of the present disclosure, a user may further control a continuous working duration of the vehicle-mounted refrigerator by setting the delay duration based on the above-mentioned turned-on delay switch.

Specifically, when the vehicle state of the vehicle becomes from the above-mentioned local ACC or local ON to the local OFF, that is, after the vehicle flames out, at the moment, under the condition that the above-mentioned set turned-on delay switch is still not turned off by the user or other factors, the vehicle-mounted refrigerator will continuously work in the current local OFF state of the vehicle.

At the same time, after it is known by the XCU that the vehicle state is the local OFF, the timing process will be started; wherein the timing process aims at the delay duration set above, and when the timing process reaches the delay duration, timing is ended; for example, when the set delay duration is 3 hours, the timing process should be timed as 3 hours.

In some embodiments, in the timing process for the working duration, the XCU will detect the SOC of the power battery in real time, and under the condition that the SOC is always greater than the above-mentioned preset threshold power, the timing process will be continuously performed, and the vehicle-mounted refrigerator is controlled to continuously work.

After the timing process is ended, the vehicle-mounted refrigerator stops working, that is, the vehicle-mounted refrigerator is controlled in a state that the refrigerator=OFF.

In some embodiments, according to the above-mentioned steps, when the vehicle-mounted refrigerator is in the state that the refrigerator=OFF, the XCU also controls the delay switch to be in a state that the delay switch=OFF at the same time.

In some other embodiments, the controlling the vehicle-mounted refrigerator to be in a turned-on state or a turned-off state according to a timing process for the working duration includes:
in response to determining that the battery power is less than or equal to the threshold power, controlling the vehicle-mounted refrigerator to be turned off; and
in response to turning off the vehicle-mounted refrigerator, turning off the delay switch.

In the present embodiment, in the timing process for the working duration, the XCU will still detect the SOC of the power battery in real time, and under the condition that the detected SOC is less than or equal to the above-mentioned preset threshold power, the XCU will end the timing process.

In some embodiments, when the timing process is ended, the XCU will further turn off the delay switch, and control the vehicle-mounted refrigerator to be in a state that the refrigerator=OFF.

In another embodiment of the present disclosure, the controlling the vehicle-mounted refrigerator to be in a turned-on state or a turned-off state according to a timing process for the working duration further includes:
in response to determining that the vehicle state becomes from the powered-off state to the startup state, turning off the delay switch.

In the present embodiment, based on the above-mentioned timing process, the XCU will acquire the vehicle state of the vehicle in real time, and performs different control on the delay switch and the vehicle-mounted refrigerator according to the change of the current vehicle state of the vehicle.

Specifically, based on the timing process in the aforesaid embodiment, it may be seen that the timing process is performed based on the vehicle being in the local OFF state, and when it is detected by the XCU that the current vehicle state of the vehicle becomes from the local OFF to the local ACC, it may be regarded that the current vehicle is still not started, and it is regarded that the current vehicle may be still unmanned.

Therefore, when the vehicle state becomes from the local OFF to the local ACC, the vehicle-mounted refrigerator and the delay switch are still controlled to be kept in the original state.

Specifically, the XCU keeps the delay switch in a state that the delay switch=ON, and keeps the vehicle-mounted refrigerator in a state that the refrigerator=ON.

In another embodiment of the present disclosure, the controlling the vehicle-mounted refrigerator to be in a turned-on state or a turned-off state according to a timing process for the working duration further includes:
in the timing process for the working duration, in response to determining that the vehicle state becomes from the powered-off state to the powered-on state, keeping the delay switch to be in a turned-on state; and
in response to the delay switch being in the turned-on state, keeping the vehicle-mounted refrigerator to be in the turned-on state.

In the present embodiment, based on the above-mentioned timing process, the XCU will acquire the vehicle state of the vehicle in real time, and performs different control on the delay switch and the vehicle-mounted refrigerator according to the change of the current vehicle state of the vehicle.

Specifically, based on the timing process in the aforesaid embodiment, it may be seen that the timing process is performed based on the vehicle being in the local OFF state, and when it is detected by the XCU that the current vehicle state of the vehicle becomes from the local OFF to the local ON, it may be regarded that the vehicle has become from a powered-off state during vehicle flameout to a startup state at present, and therefore, it may be regarded as that the current vehicle has been managed by related personnel. Therefore, the delay switch may be turned off, and the vehicle-mounted refrigerator is kept to continue to work.

Specifically, in a process that the XCU detects the vehicle state in real time, when it is determined by the XCU that the vehicle state becomes from the local OFF to the local ON, the state of the delay switch is controlled to become from the delay switch=ON to the delay switch=OFF, and the vehicle-mounted refrigerator is controlled to be kept in a state that the refrigerator=ON.

In some other embodiments of the present disclosure, as shown in FIG. 2, as a visualized HU, the HU not only may interact with a user of the vehicle, but also may interact with the XCU.

Specifically, a user of the vehicle-mounted refrigerator may perform a user operation, such as delay duration setting, by means of the HU; when the delay switch=ON, the HU displays that the delay switch is in a clickable state; and when the delay switch=OFF, the HU displays that the delay switch is in an unclickable gray display or undisplay state. In some embodiments, when the delay switch is in the clickable state, a function for setting the delay duration may be displayed on the HU, and the user may further set the delay duration for the vehicle-mounted refrigerator on the HU; and when the delay switch=OFF, the function for setting the delay duration is displayed on the HU, or the function for setting the delay duration is set as gray display.

In some embodiments, the XCU may further acquire the current state of the delay switch by means of the HU, and control the delay switch by means of the HU.

Specifically, when the delay switch is set in the state that the delay switch=ON or the delay switch=OFF according to the user operation, the HU sends the current state of the delay switch and related setting instructions for the delay duration to the XCU.

In some embodiments, the HU will also receive control instructions for the delay and the delay duration of the switch in real time, wherein the control instructions are fed back by the XCU, and the HU will control the display of the delay switch and the delay duration according to the control instructions.

In some other embodiments of the present disclosure, after the controlling the vehicle-mounted refrigerator to be turned off, the method further includes:
according to a vehicle state and a battery power when the vehicle-mounted refrigerator is turned off, determining a reason that the vehicle-mounted refrigerator is turned off; and
visually displaying the reason.

In the present embodiment, based on a visualization function of the HU disposed in the aforesaid embodiment, the reason that the vehicle-mounted refrigerator is turned off may be displayed for a user of the vehicle-mounted refrigerator.

Specifically, when the reason that the vehicle-mounted refrigerator is turned off is that it is detected by the XCU that the SOC of the power battery is less than or equal to the threshold power, it will be determined by the HU that too low SOC is the reason that the vehicle-mounted refrigerator is turned off; and the delay switch is turned off in this case.

In some embodiments, the HU will display characters, such as "the reason that the refrigerator may not be turned on=too low SOC".

In some embodiments, when it is detected by the XCU that the delay switch=ON and the vehicle is in the local ACC or local ON state, and under the condition that it is detected by the XCU that the working state of the refrigerator is turned off before receiving any fault code, the reason that the refrigerator is turned off is determined as that the refrigerator is actively turned off by the user; and the delay switch is turned off in this case.

In some embodiments, the HU will display characters, such as "the reason that the refrigerator may not be turned on=the refrigerator is turned off".

In some embodiments, when it is detected by the XCU that the delay switch=ON and the vehicle is in the local OFF state and the SOC of the power battery is greater than the threshold power, and under the condition that the XCU receives any refrigerator fault code or detects that the working state of the refrigerator is turned off, the reason that the refrigerator is turned off is determined as that the vehicle-mounted refrigerator has a fault; and the delay switch is turned off in this case.

In some embodiments, the HU will display characters, such as "the reason that the refrigerator may not be turned on=the refrigerator has a fault".

In some embodiments, when it is detected by the XCU that the delay switch=ON and the vehicle is in the local OFF state and the SOC of the power battery is greater than the threshold power, and under the condition that the XCU receives any other refrigerator fault codes or detects that the complete vehicle may not be powered on at a high voltage, the reason that the refrigerator is turned off is determined as that the complete vehicle has a fault; and the delay switch is turned off in this case.

In some embodiments, the HU will display characters, such as "the reason that the refrigerator may not be turned on=the complete vehicle has a fault".

It may be seen that according to the method for controlling the vehicle-mounted refrigerator in the embodiment of the present disclosure, the vehicle-mounted refrigerator is controlled by comprehensively considering different vehicle states including the powered-on, powered-off and startup states based on detection for the vehicle state and the battery power, and the set threshold power is combined, so that the vehicle-mounted refrigerator may be immediately turned off when the battery power is less than or equal to the threshold power, and thus, the situation that the vehicle-mounted refrigerator works to run out of the battery power is avoided.

In some embodiments, by means of the delay switch turned on in the powered-on or startup state, on the premise that the battery power is greater than the threshold power, the continuous work of the vehicle-mounted refrigerator may be achieved after the vehicle is powered off, and the vehicle-mounted refrigerator may be controlled according to the set working duration and may be specifically controlled to be kept turned on or off according to a situation in the timing process.

In some other embodiments of the present disclosure, after the turning on the vehicle-mounted refrigerator when the vehicle state becomes the powered-off state, the method further includes:
determining the current temperature in the vehicle-mounted refrigerator in real time, and setting a temperature threshold;
in response to determining that the current temperature is lower than the temperature threshold, controlling the vehicle-mounted refrigerator to be turned off; and
in response to determining that the current temperature is higher than or equal to the temperature threshold, controlling the vehicle-mounted refrigerator to be kept turned-on.

In the present embodiment, the vehicle-mounted refrigerator may interruptedly work by means of real-time detection for the current temperature of the vehicle-mounted refrigerator, so that the purpose of not only saving the battery power, but also keeping the temperature in the vehicle-mounted refrigerator is achieved.

Specifically, the current temperature in the vehicle-mounted refrigerator may be detected in real time, the temperature threshold for controlling the vehicle-mounted refrigerator to be turned on or turned off is set for the vehicle-mounted refrigerator.

In some embodiments, after the vehicle becomes from the local ON or the local ACC to the local OFF and the delay duration is started, the vehicle-mounted refrigerator may keep turned-on when the battery power is greater than the threshold power.

In some embodiments, in a state that the vehicle-mounted refrigerator keeps turned-on, a size relationship between the current temperature and the temperature threshold is determined based on the current temperature determined in real time.

In some embodiments, under the condition that it is detected that the current temperature is greater than or equal to the temperature threshold, the turned-on state of the vehicle-mounted refrigerator is continuously kept; and under the condition that it is detected that the current temperature is lower than the temperature threshold, the vehicle-mounted refrigerator is turned off.

In some embodiments, after the vehicle-mounted refrigerator is turned off, the current temperature may be further detected, and the above-mentioned process is repeated.

In some other embodiments of the present disclosure, real-time determination for the battery power may further includes:
disposing a storage battery supplying electric power for the vehicle-mounted refrigerator;
utilizing the power battery provided in the vehicle to supply power to the storage battery;
determining residual power of the storage battery in real time; and
taking the residual power of the storage battery as the battery power.

In the present embodiment, the power battery of the vehicle is utilized to supply power to the storage battery of the vehicle-mounted refrigerator, and the current residual power of the storage battery determined in real time is taken as the battery power.

Specifically, a percent of the current available power of the storage battery to a capacity of the storage battery is expressed as the battery power, and residual battery power of the storage battery is expressed as SOC, that is, the residual battery power is displayed on the surface of the storage battery; and in some other embodiments, the battery power may also be expressed by the current specific residual power of the storage battery, such as 20000 mAh.

In some embodiments, the battery power of the storage battery may be acquired in real time by the XCU.

In some other embodiments, the utilizing the power battery provided in the vehicle to supply power to the storage battery includes:
setting a power supply threshold for the power battery;
determining the residual power of the power battery in real time;
in response to determining that the residual power of the power battery is greater than the power supply threshold, enabling the power battery to continuously supply power to the storage battery; and
in response to determining that the residual power of the power battery is less than or equal to the power supply threshold, enabling the power battery to stop supplying power to the storage battery.

In the present embodiment, when the power battery is utilized to supply power to the storage battery, in order to avoid running out of the power of the power battery, the power supply threshold may be set for the power battery, and the residual power of the power battery is detected in real time.

In some embodiments, when the residual power of the power battery is greater than the power supply threshold, it is regarded that the power of the power battery is sufficient so as to be capable of supplying power to the storage battery; and when the residual power of the power battery is less than or equal to the power supply threshold, it is regarded that the power of the power battery is insufficient so as to be difficult to supply power to the storage battery, and the power battery is enabled to stop supplying power to the storage battery.

It may be seen that the present method is used for controlling the vehicle-mounted refrigerator in conjunction with different vehicle states and battery powers, so that not only may the vehicle-mounted refrigerator be continuously used after being powered off, but also the situation that the battery power runs out in various vehicle states is avoided.

It should be noted that the method in the embodiment of the present disclosure may be performed by single device, such as a computer or a server. The method in the present embodiment may also be applied to a distributed scenario and may be completed by mutual cooperation of a plurality of devices. In such a distributed scenario, one of the plurality of devices may only perform a certain or more steps of the method in the embodiment of the present disclosure, and the plurality of devices will interact to complete the method.

It should be noted that some embodiments of the present disclosure have been described above. Other embodiments fall within the scope of the appended claims. In some cases, actions or steps recorded in the claims may be performed in a different order from that in the above-mentioned embodiments, and desired results may be still achieved. In addition, processes described in the accompanying drawings do not necessarily require the shown specific order or continuous order to achieve the desired results. In some implementations, multitask processing and concurrent processing may also be or may be favorable.

Based on the same inventive concept, in correspondence to the method in any above-mentioned embodiment, an embodiment in a second aspect of the present disclosure further provides an apparatus for controlling a vehicle-mounted refrigerator.

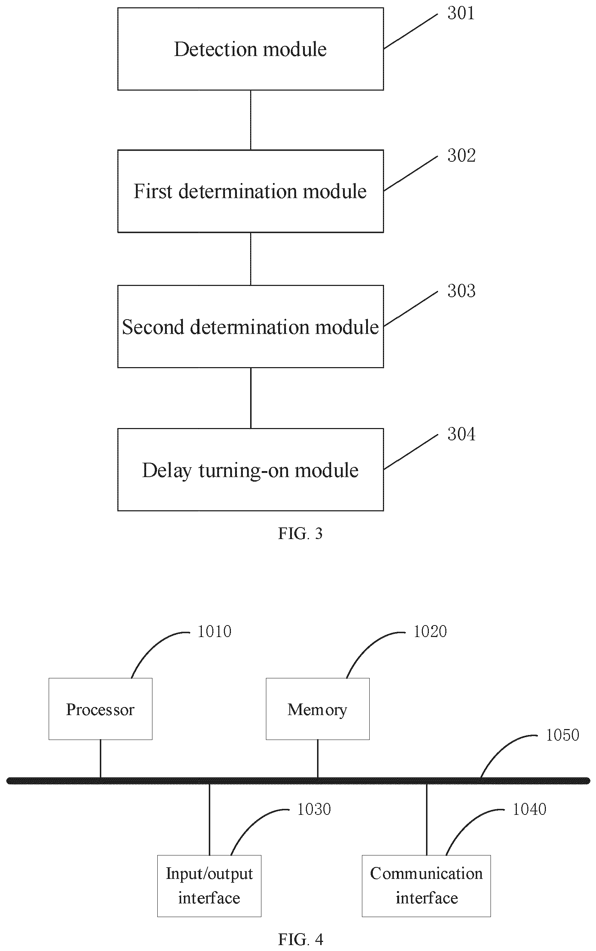

Referring to FIG. 3, the apparatus for controlling the vehicle-mounted refrigerator includes a detection module 301, a first determination module 302, a second determination module 303, and a delay turn-on module 304;
wherein the detection module 301 is configured to respectively determine a vehicle state and a battery power of a vehicle in real time;
the first determination module 302 is configured to, in response to determining that the battery power is less than or equal to a preset threshold power and the vehicle state is a powered-on state or a startup state, control the vehicle-mounted refrigerator to be turned off, and in response to turning off the vehicle-mounted refrigerator, turn off a delay switch setting a working duration for the vehicle-mounted refrigerator;
the second determination module 303 is configured to, in response to determining that the battery power is greater than the threshold power and determining that the vehicle state is the powered-on state or the startup state, keep turning on the delay switch of the vehicle-mounted refrigerator; and
the delay turn-on module 304 is configured to, in response to determining that the delay switch is turned on and the working duration is set for the vehicle-mounted refrigerator, turn on the vehicle-mounted refrigerator when the vehicle state becomes a powered-off state, and control the vehicle-mounted refrigerator to be in a turned-on state or a turned-off state according to a timing process for the working duration.

For facilitating description, above apparatus is divided into various modules to be respectively described according to functions. Of course, when the embodiment of the present disclosure is implemented, functions of all the modules may be achieved in the same or more software and/or hardware.

The apparatus in the above-mentioned embodiment is used for implementing the method for controlling the vehicle-mounted refrigerator in the embodiment in the above-mentioned first aspect, and has the beneficial effects the same as those of the corresponding method embodiment so as to be no longer repeated herein.

Based on the same inventive concept, in correspondence to the method in any above-mentioned embodiment, an embodiment in a third aspect of the present disclosure further provides an electronic device, including a memory, a processor, and a computer program stored in the memory and runnable on the processor, wherein the processor implements the method for controlling the vehicle-mounted refrigerator in the embodiment in the above-mentioned first aspect when executing the program.

FIG. 4 shows a schematic diagram of a more specific hardware structure of an electronic device provided according to the present embodiment. The device may include a processor 1010, a memory 1020, an input/output interface 1030, a communication interface 1040, and a bus 1050, wherein the processor 1010, the memory 1020, the input/output interface 1030 and the communication interface 1040 are in communication connection inside the device by means of the bus 1050.

The processor 1010 may be implemented in a mode such as a universal Central Processing Unit (CPU), a microprocessor, an Application Specific Integrated Circuit (ASIC) or one or more integrated circuits, and is used for executing related programs to implement the technical solutions provided in the embodiments of the present disclosure.

The memory 1020 may be implemented in a mode such as a Read Only Memory (ROM), a Random Access Memory (RAM), a static storage device, and a dynamic storage device. The memory 1020 may store an operating system and other applications, and when the technical solutions provided in the embodiments of the present disclosure are achieved by means of software or firmware, related program codes are stored in the memory 1020 and are called and executed by the processor 1010.

The input/output interface 1030 is used for connection with an input/output module so as to achieve information input and output. The input/output module may be used as a component to be disposed in a device (unshown in the figure), and may also be externally connected to a device so as to provide a corresponding function. Wherein input devices may include a keyboard, a mouse, a touch screen, a microphone, various sensors, etc., and output devices may include a display, a loudspeaker, a vibrator, an indicator lamp, etc.

The communication interface 1040 is used for connection with a communication module (unshown in the figure) so as to achieve communication interaction between the device and other devices. Wherein the communication module may achieve communication in a wired mode (such as a Universal Serial Bus (USB) and a network cable) or a wireless mode (such as a mobile network, a Wireless Fidelity (WIFI), and a Bluetooth).

The bus 1050 includes a channel for transmitting information among all the components (such as the processor 1010, the memory 1020, the input/output interface 1030, and the communication interface 1040) of the device.

It should be noted that the above-mentioned device shows the processor 1010, the memory 1020, the input/output interface 1030, the communication interface 1040 and the bus 1050, however, in a specific implementation process, the device may further include other components required for achieving normal operation. In addition, it may be understood by those skilled in the art that the above-mentioned device may also only include components required for achieving the solutions in the embodiments of the present disclosure, but does not necessarily include all the components in the figure.

The apparatus in the above-mentioned embodiment is used for implementing the corresponding method for controlling the vehicle-mounted refrigerator in any one of aforesaid embodiments, and has the beneficial effects of the corresponding method embodiment so as to be no longer repeated herein.

Based on the same inventive concept, in correspondence to the method according to any above-mentioned embodiment, an embodiment in a fourth aspect of the present disclosure provides a non-transitory computer-readable storage medium, wherein the non-transitory computer-readable storage medium stores a computer instruction, and the computer instruction is used for enabling a computer to perform the method for controlling the vehicle-mounted refrigerator in the embodiment in the above-mentioned first aspect.

Based on the same inventive concept, in correspondence to the method according to any above-mentioned embodiment, an embodiment in a fifth aspect of the present disclosure provides a vehicle, wherein the vehicle includes the apparatus for controlling the vehicle-mounted refrigerator in the embodiment in the above-mentioned second aspect or the electronic device in the embodiment in the above-mentioned third aspect, and the apparatus or the electronic device performs the method for controlling the vehicle-mounted refrigerator in the embodiment in the above-mentioned first aspect.

Based on the same inventive concept, in correspondence to the method according to any above-mentioned embodiment, an embodiment in a sixth aspect of the present disclosure provides a computer program product, including a computer program implementing the method for controlling the vehicle-mounted refrigerator in the embodiment in the above-mentioned first aspect when being executed by a processor.

Based on the same inventive concept, in correspondence to the method according to any above-mentioned embodiment, an embodiment in a seventh aspect of the present disclosure provides a computer program, including computer program codes enabling a computer to perform the method for controlling the vehicle-mounted refrigerator in the embodiment in the above-mentioned first aspect when running on the computer.

It should be noted that the aforesaid explanation for the method embodiment for controlling the vehicle-mounted refrigerator is also applicable to the apparatus, the electronic device, the vehicle, the computer-readable storage medium, the computer program product and the computer program in the embodiments of the present disclosure so as to be no longer repeated herein.

All embodiments in the present disclosure can be executed separately or in combination with other embodiments, and are considered within the scope of protection required by the present disclosure.

The computer-readable medium of this embodiment includes permanent and non-permanent, removable and non-removable media, which can be implemented for information storage by any method or technology. Information can be computer-readable instructions, data structures, modules of programs, or other data. Examples of storage media for computers include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, read-only optical disc read-only memory (CD-ROM), digital versatile disc (DVD) or other optical storage, magnetic tape cartridges, magnetic tape storage or other magnetic storage devices, or any other non-transmission medium that can be used to store information that can be accessed by computing devices.

The computer instructions stored in the storage medium of the above embodiments are used to enable the computer to execute the car refrigerator control method as described in any of the embodiments, and have the beneficial effects of the corresponding method embodiments, which will not be repeated here.

Persons skilled in the art should understand that the discussion of any of the above embodiments is only exemplary and is not intended to imply that the scope of the present disclosure (including claims) is limited to these examples; under the concept of the present disclosure, the technical features in the above embodiments or different embodiments can also be combined, and the steps can be implemented in any order. There are many other variations of the different aspects of the disclosed embodiments as described above, which are not provided in detail for the sake of simplicity.

In addition, to simplify the explanation and discussion, and to avoid making the embodiments of the present disclosure difficult to understand, well-known power/ground connections to integrated circuit (IC) chips and other components may or may not be shown in the provided drawings. In addition, the device can be shown in the form of a block diagram to avoid making the disclosed embodiments difficult to understand, and this also takes into account the fact that the details of the implementation of these block diagram devices are highly dependent on the platform on which the disclosed embodiments will be implemented (i.e., these details should be fully within the understanding of those skilled in the art). In describing the exemplary embodiments of the present disclosure with specific details (such as circuits), it is apparent to those skilled in the art that the embodiments of the present disclosure can be implemented without these specific details or with variations in these specific details. Therefore, these descriptions should be considered illustrative rather than restrictive.

Although the present disclosure has been described in conjunction with specific embodiments, many substitutions, modifications, and variations of these embodiments will be apparent to those skilled in the art based on the preceding description. For example, other memory architectures such as dynamic RAM (DRAM) can use the embodiments discussed.

The embodiments of the present disclosure are intended to encompass all such substitutions, modifications, and variations falling within the broad scope of the appended claims. Therefore, any omission, modification, equivalent substitution, improvement, etc., made within the spirit and principles of the embodiments of the present disclosure should be included within the scope of protection of the present disclosure.

## Claims

1. A method for controlling a vehicle-mounted refrigerator, comprising:
respectively determining a vehicle state and a battery power of a vehicle in real time;
in response to determining that the battery power is less than or equal to a preset threshold power and the vehicle state is a powered-on state or a startup state, controlling the vehicle-mounted refrigerator to be turned off, and in response to turning off the vehicle-mounted refrigerator, turning off a delay switch setting a working duration for the vehicle-mounted refrigerator;
in response to determining that the battery power is greater than the threshold power and determining that the vehicle state is the powered-on state or the startup state, keeping turning on the delay switch of the vehicle-mounted refrigerator; and
in response to determining that the delay switch is turned on and the working duration is set for the vehicle-mounted refrigerator, turning on the vehicle-mounted refrigerator when the vehicle state becomes a powered-off state, and controlling the vehicle-mounted refrigerator to be in a turned-on state or a turned-off state according to a timing process for the working duration.

2. The method according to claim 1, wherein the controlling the vehicle-mounted refrigerator to be in a turned-on state or a turned-off state according to a timing process for the working duration comprises:
in response to determining that the battery power is less than or equal to the threshold power, controlling the vehicle-mounted refrigerator to be turned off; and
in response to turning off the vehicle-mounted refrigerator, turning off the delay switch.

3. The method according to claim 1 or 2, wherein the controlling the vehicle-mounted refrigerator to be in a turned-on state or a turned-off state according to a timing process for the working duration further comprises:
in response to determining that the timing process is ended, controlling the vehicle-mounted refrigerator to be turned off; and
in response to turning off the vehicle-mounted refrigerator, turning off the delay switch.

4. The method according to any one of claims 1 to 3, wherein the controlling the vehicle-mounted refrigerator to be in a turned-on state or a turned-off state according to a timing process for the working duration further comprises:
in response to determining that the vehicle state becomes from the powered-off state to the startup state, turning off the delay switch.

5. The method according to any one of claims 1 to 4, wherein the controlling the vehicle-mounted refrigerator to be in a turned-on state or a turned-off state according to a timing process for the working duration further comprises:
in the timing process for the working duration, in response to determining that the vehicle state becomes from the powered-off state to the powered-on state, keeping the delay switch to be in a turned-on state; and
in response to the delay switch being in the turned-on state, keeping the vehicle-mounted refrigerator to be in the turned-on state.

6. The method according to any one of claims 1 to 5, wherein after the controlling the vehicle-mounted refrigerator to be turned off, the method further comprises:
according to a vehicle state and a battery power when the vehicle-mounted refrigerator is turned off, determining a reason that the vehicle-mounted refrigerator is turned off; and
visually displaying the reason.

7. The method according to any one of claims 1 to 6, wherein after the turning on the vehicle-mounted refrigerator when the vehicle state becomes the powered-off state, the method further comprises:
determining the current temperature in the vehicle-mounted refrigerator in real time, and setting a temperature threshold;
in response to determining that the current temperature is lower than the temperature threshold, controlling the vehicle-mounted refrigerator to be turned off; and
in response to determining that the current temperature is higher than or equal to the temperature threshold, controlling the vehicle-mounted refrigerator to be kept turned-on.

8. The method according to any one of claims 1 to 7, wherein real-time determination for the battery power comprises:
taking a power battery provided in the vehicle as a power supply battery of the vehicle-mounted refrigerator, and determining residual power of the power battery in real time; and
taking the residual power of the power battery as the battery power.

9. The method according to any one of claims 1 to 8, wherein the real-time determination for the battery power further comprises:
disposing a storage battery supplying electric power for the vehicle-mounted refrigerator;
utilizing a power battery provided in the vehicle to supply power to the storage battery;
determining residual power of the storage battery in real time; and
taking the residual power of the storage battery as the battery power.

10. The method according to claim 9, wherein the utilizing the power battery provided in the vehicle to supply power to the storage battery comprises:
setting a power supply threshold for the power battery;
determining the residual power of the power battery in real time;
in response to determining that the residual power of the power battery is greater than the power supply threshold, enabling the power battery to continuously supply power to the storage battery; and
in response to determining that the residual power of the power battery is less than or equal to the power supply threshold, enabling the power battery to stop supplying power to the storage battery.

11. An apparatus for controlling a vehicle-mounted refrigerator, comprising a detection module, a first determination module, a second determination module, and a delay turn-on module; wherein
the detection module is configured to respectively determine a vehicle state and a battery power of a vehicle in real time;
the first determination module is configured to, in response to determining that the battery power is less than or equal to a preset threshold power and the vehicle state is a powered-on state or a startup state, control the vehicle-mounted refrigerator to be turned off, and in response to turning off the vehicle-mounted refrigerator, turn off a delay switch setting a working duration for the vehicle-mounted refrigerator;
the second determination module is configured to, in response to determining that the battery power is greater than the threshold power and determining that the vehicle state is the powered-on state or the startup state, keep turning on the delay switch of the vehicle-mounted refrigerator; and
the delay turn-on module is configured to, in response to determining that the delay switch is turned on and the working duration is set for the vehicle-mounted refrigerator, turn on the vehicle-mounted refrigerator when the vehicle state becomes a powered-off state, and control the vehicle-mounted refrigerator to be in a turned-on state or a turned-off state according to a timing process for the working duration.

12. An electronic device, comprising a memory, a processor, and a computer program stored in the memory and executable for the processor, wherein the processor, when executing the computer program, implements the method according to any one of claims 1 to 10.

13. A non-transitory computer-readable storage medium, wherein the non-transitory computer-readable storage medium stores a computer instruction, and the computer instruction is used for enabling a computer to perform the method according to any one of claims 1 to 10.

14. A vehicle, comprising the apparatus for controlling the vehicle-mounted refrigerator according to claim 11 or the electronic device according to claim 12.

15. A computer program product, comprising a computer program, wherein the computer program, when being executed by a processor, implements the method according to any one of claims 1 to 10.

16. A computer program, comprising computer program codes, wherein the computer program codes, when running on the computer, enable a computer to perform the method according to any one of claims 1 to 10.
